# EUROPÄISCHE PATENTANMELDUNG

(11) **EP 1 152 019 A1**
(43) Veröffentlichungstag der Anmeldung: **07.11.2001**
(21) Anmeldenummer: 00109342.6
(22) Anmeldetag: 02.05.2000
(51) Int. Cl.: C08G 18/28, C09K 3/10, C09J 175/00

(54) **Thixotropiermittel**

(71) Anmelder: Sika AG, vorm. Kaspar Winkler & Co., CH-8048 Zürich (CH)
(72) Erfinder: Merz, Peter W., 8832 Wollerau (CH); Onuoha, Ukiwo, 8303 Bassersdorf (CH); Tsuno, Shingo, 8049 Zürich (CH)
(74) Vertreter: Blum, Rudolf Emil Ernst

(57) **Zusammenfassung**

Es werden neue Thixotropiermittel für vernetzende Systeme, insbesondere für einkomponentige Kleb- und Dichtstoffe beschrieben. Diese zeichnen sich dadurch aus, dass sie einerseits eine geringe bzw. keine Viskositätserhöhung verursachen und andererseits keinen Anlass für ein Ausschwitzen bzw. für ein Migrieren geben. Die erfindungsgemässen Thixotropiermittel basieren auf Harnstoffderivaten, welche in einer Konzentration von 5 bis 50%, insbesondere von 15 bis 30%, in einem vorzugsweise reaktiven Trägermaterial vorliegen. Das reaktive Trägermaterial ist nach der Vernetzung des Systems vorzugsweise in der Strukturmatrix eingebaut bzw. mit der Strukturmatrix verwoben und kann demzufolge nicht mehr aus dem gehärteten Material diffundieren.

## Beschreibung

### Thixotropiermittel

Die vorliegende Erfindung betrifft neue Thixotropiermittel für fliessfähige Systeme, insbesondere für die Herstellung von migrationsfreien Kleb- und Dichtstoffen.

### Stand der Technik

Für die Herstellung von standfesten fliessfähigen Systemen werden Thixotropiermittel verwendet. Dabei kommen häufig anorganische Füllstoffe, wie z.B. Russ, Aerosil etc. zum Einsatz. Die Thixotropierung mit solchen Füllstoffen bewirkt meistens eine Viskositätserhöhung und kommt darum insbesondere für die Herstellung von maschinell verarbeitbaren Massen in Betracht. Für die Handverarbeitung, z.B. aus der Kartusche, werden die Massen bevorzugt durch organische Thixotropiermittel standfest eingestellt, da diese praktisch keine Viskositätserhöhung bewirken. Organische Thixotropiermittel sind z.B. Amid-Wachse, hydrolisierte Rizinusöle oder Harnstoffderivate, welche in einem inerten Trägermaterial, wie z.B. Weichmacher, Kohlenwasserstoffe etc., hergestellt werden. Diese inerten Trägermaterialien haben aber den Nachteil, dass diese auch aus einem vernetzten System, wie z.B. einem einkomponentigen Polyurethansystem, migrieren können und so zu einer Qualitätseinbusse führen. Dies kann je nach Gegebenheiten verschiedene Auswirkungen haben: einen Haftungsverlust im Falle eines Klebstoffes, abhängig von den austretenden Substanzen eine gesundheitliche Gefährdung von Menschen, eine optische Beeinträchtigung von saugfähigen Untergründen etc.

Es ist das Ziel der vorliegenden Erfindung neue Thixotropiermittel für Kleb- und Dichtstoffe bereitzustellen, welche die oben beschriebenen Nachteile überwinden.

### Darstellung der Erfindung

Die erfindungsgemässen Thixotropiermittel beruhen ebenfalls auf dem Einsatz von Harnstoffderivaten, wobei aber deren Herstellung in einem Trägermaterial erfolgt, welches nach der Vernetzung entweder mit der Strukturmatrix verwoben ist oder eine ausgeprägte Verträglichkeit zum gesamten System aufweist oder in die Strukturmatrix eingebaut wird und demzufolge nicht mehr aus dem gehärteten Material hinausdiffundieren kann. Eine Diffusion des Trägermaterials sollte visuell auf Weiss-Zement nicht feststellbar sein.

Im Rahmen dieser Erfindung geeignete Trägermaterialien sind solche, die gemäss dem folgenden Bestimmungsverfahren keine Diffusion zeigen: Das Thixotropiermittel resp. ein das Thixotropiermittel enthaltender Klebstoff wird in Raupenform auf Weiss-Zement aufgetragen. Nach 7 Tagen Vernetzung bei 23°C und 50 % relativer Feuchte (r.F.) wird die Randzone der Klebstoffraupe visuell auf Migrationserscheinungen beurteilt. Ein Thixotropiermittel, resp. Trägermaterial, das unter solchen Bedingungen visuell keine feststellbare Diffusion zeigt, wird in der Folge als nicht-diffundierend etc. bezeichnet.

Die erfindungsgemässe Thixotropierung ist geeignet für jedes vernetzbare System. Bei diesem kann es sich um ein Zweikomponentensystem handeln, das durch Vermischung eines Bindemittels - auch als Harzkomponente bezeichnet - mit einem Härter vernetzt. Die Harzkomponente enthält reaktive Gruppen, wie z.B. Acrylatgruppen, Epoxidgruppen, Isocyanatgruppen, Silangruppen etc. Als Härter kommen z.B. Amingruppen oder Hydroxidgruppen oder Schwefelgruppen enthaltende Verbindungen, Initiatoren zur Initiierung einer Polymerisation von aktivierten Doppelbindungen, Wasser, Katalysatoren etc. zum Einsatz. Das vernetzbare System kann auch einkomponentig sein und entweder thermisch durch Hitze oder mittels Wasser aus der Umgebungsfeuchte oder durch Einwirkung von Strahlen, wie z.B. UV-Bestrahlung, härten.

Die Chemie für die Herstellung von Harnstoffderivaten ist bekannt (siehe z.B. DE 1805693) und basiert bevorzugt auf der Umsetzung von aromatischen, monomeren Diisocyanaten (Isocyanat-Monomer), wie z.B. 4,4'-Diphenylmethylendiisocyanat (= MDI), mit einer aliphatischen Aminverbindung, wie z.B. Butylamin. Da beide Verbindungen, das Isocyanat sowie das Amin, sehr reaktiv sind, wird das Harnstoffderivat unmittelbar nach dem Vermischen der Komponenten in Form eines Feststoffes im Trägermaterial ausgebildet. Im Rahmen der vorliegenden Erfindung erzwingt diese hohe Reaktivität der beiden Reaktionspartner aber auch die Erarbeitung einer guten Prozessführung und die optimale Auswahl des Trägermaterials, vorzugsweise eines reaktiven Trägermaterials, um unerwünschte Nebenreaktionen weitestgehend auszuschliessen. Das Harnstoffderivat kann im Trägermaterial in einer Konzentration von 5 bis über 50%, bevorzugt im Bereich zwischen 15 und 30% vorliegen, und der Gehalt ist abhängig von der Handhabbarkeit des resultierenden Thixotropiermittels.

Bei der Herstellung des erfindungsgemässen Thixotropiermittels muss der Einfluss von Wasser im Trägermaterial bei der stöchiometrischen Berechnung der Mengen von Isocyanat-Monomer, wie MDI, und Aminverbindung berücksichtigt werden.

Nicht reaktive Trägermaterialien sind langkettige Polymere mit hoher Affinität zum vernetzbaren resp. vernetzten System. Diese Affinität kann gegebenenfalls durch geeignete Substitution erhöht werden, so dass Diffusion des Trägermaterials im vernetzten System unterbleibt.

Bevorzugte Trägermaterialien sind reaktive Trägermaterialien, wie Polyole, blockierte Isocyanatpolymere (mit blockierten Isocyanatgruppen terminierte Prepolymere), Silangruppen terminierte Prepolymere und/oder Acrylatgruppen enthaltende Polymere.

Die Herstellung der erfindungsgemässen Thixotropiermittel kann auf verschiedene Weise erfolgen. Zwei Möglichkeiten werden in der Folge anhand von Polyol-Prepolymer näher beschrieben. Diese Verfahren sind analog auf blockierte Isocyanatprepolymere und Silangruppen terminierte Prepolymere anwendbar. Die Herstellung von Thixotropiermitteln mit nicht reaktiven Trägermaterialien ist weniger kritisch, da unerwünschte Nebenreaktionen ausgeschlossen sind.

In einem ersten Verfahren wird das Isocyanat-Monomer zu einem Gemisch bestehend aus der Aminverbindung und einem Polyol zugefügt. Eine weitere Möglichkeit besteht darin, dass das Isocyanat-Monomer in einem Polyol gelöst und sofort mit einem Gemisch aus der Aminverbindung und dem gleichen Polyol, im optimalen Fall in einem equivalenten Mischungsverhältnis von 1:1 Isocyanat: Amin, versetzt wird. Dabei haben Versuche gezeigt, dass die Qualität des resultierenden Thixotropiermittels abhängig von der OH-Zahl ist, da das Isocyanat-Monomer sofort mit den Hydroxylgruppen des Polyols reagiert. Eine gute Qualität wird erzielt, wenn die OH-Zahl unterhalb von 28 mg KOH/g, bevorzugt unterhalb 10 mg KOH/g, bzw. das Molekulargewicht pro OH-Gruppe oberhalb von 2000, insbesondere oberhalb von 6000, liegt.

Das Polyol ist bevorzugt bei Raumtemperatur, resp. bei ca. 20-25°C flüssig, um einerseits eine aufwendige Erwärmung zur Verflüssigung und andererseits eine zusätzliche Wärmeabfuhr bei der exothermen Herstellung des Harnstoffderivates zu vermeiden. Als Polyole kommen insbesondere Polyether in Frage. Falls das Polyol ein Polyethylenglycol ist, kann das erfindungsgemässe Thixotropiermittel als Basis für einen mit Wasser quellbaren Dichtstoff dienen.

Mercaptogruppen enthaltende Verbindungen als Trägermaterial sind kaum geeignet, da diese gegenüber der Isocyanatkomponente noch reaktiver als Hydroxylgruppen sind und deutlich zu unerwünschten Nebenreaktionen führen.

In einer weiteren Ausführungsform können die erfindungsgemässen Thixotropiermittel, die Polyole als Trägermaterial enthalten, mit einer Isocyanatverbindung, wie z.B. monomeren Diisocyanatverbindungen, Isocyanatmethacrylat, Isocyanatpropylsilan etc. umgesetzt und damit in ein Bindemittel resp. ein mit reaktiven Gruppen terminiertes, z.B. ein Isocyanat-terminiertes Trägermaterial überführt werden.

Bei einer weiteren Möglichkeit zur Herstellung eines erfindungsgemässen Thixotropiermittels wird als Trägermaterial anstelle des Polyols ein blockiertes Isocyanatprepolymer verwendet. Solche blockierten Isocyanatprepolymere sind z.B. in Progress in Organic Coatings, 3 (1975) 73-99 oder Progress in Organic Coatings, 9(1981) 3-28 beschrieben. Da diese blockierten Isocyanatgruppen nicht mit dem Amin reagieren können, ist deren Konzentration und damit die Kettenlänge unkritisch. Ein derart hergestelltes Thixotropiermittel eignet sich gut für hitzereaktive Systeme, wobei die Blockierungsgruppe aufgrund der Wärmebeaufschlagung freigesetzt wird und die entstehende Isocyanatgruppe mit einer H-aktiven Verbindung, wie z.B. OH-, NH-, SH-Gruppen etc., reagiert. Diese H-aktiven Verbindungen können zusätzlich - abhängig von der H-aktiven Gruppe - weitere funktionelle Gruppen, wie z.B. Epoxidgruppen, Silangruppen, Acrylatgruppen etc. enthalten.

Ferner können auch Silangruppen terminierte Bindemittel, wie z.B. ein MS-Polymer (MS = modified silicon) von Kaneka oder ein Silangruppen terminiertes Polyurethan-Hybrid Prepolymer, als Trägermaterial eingesetzt werden. Ein erfindungsgemässes Thixotropiermittel mit einem Silangruppen terminierten Trägermaterial findet vorzugsweise als isocyanatfreies System oder in einem isocyanatfreien System auf Silan-Basis Anwendung. Solche Prepolymere sind z.B. in den Patentschriften EP 0 355 426, US 3 627 722, DE 40 29 505, US 5 364 955, EP 0 918 062 oder US 5 910 555 beschrieben.

In einer weiteren Ausführungsform kann das Isocyanat-Monomer gelöst in einem Acrylatgruppen enthaltenden Polymer vorliegen und mit der Aminverbindung, die in einem Prepolymer auf Silan-Basis gelöst ist, versetzt werden. Solche Acrylatgruppen enthaltende Polymere sind z.B. herstellbar durch Umsetzung von Prepolymeren, die Isocyanatgruppen enthalten, mit Hydroxyethyl(meth)acrylat (siehe z.B. EP 0 675 144).

Es ist selbstverständlich auch möglich und liegt ebenfalls im Rahmen dieser Erfindung Mischungen von Trägermaterialien zu verwenden. Solche Mischungen von Trägermaterialien können Materialien gleicher oder unterschiedlicher Reaktivität aufweisen. Dabei müssen alle Reaktivitäten vorab abgeklärt werden, damit beispielsweise unerwünschte Nebenreaktionen durch "Verdünnung" entsprechend reaktiver Gruppen (siehe Polyol) vermindert werden können. Die Nebenreaktionen können auch durch ein optimiertes Produktionsverfahren, z.B. die Benützung einer Mehrkomponentenmischanlage, eingedämmt werden.

Die Thixotropiermittel der vorliegenden Erfindung können entweder direkt als fliessfähige, härtbare Bindemittel enthaltende Systeme eingesetzt werden, oder sie können mit weiteren Bindemitteln sowie üblichen Zusätzen, wie Füllstoffe, Weichmacher, Haftvermittler, Katalysatoren, UV-Stabilisatoren und/oder übliche Additive, versetzt werden, wobei solche zusätzlichen Bindemittel nicht auf die als Trägermaterialien beschriebenen Bindemittel beschränkt sind, sondern auch - abhängig vom Trägermaterial - Bindemittel mit reaktiven Gruppen, wie Epoxid-, Isocyanat-, Acrylat- und/oder Silangruppen, umfassen. Ausserdem können die Thixotropiermittel der vorliegenden Erfindung eine Härtekomponente enthalten, insbesondere einen mit Feuchtigkeit und/oder Wärme aktivierbaren latenten Härter.

Die erfindungsgemässen Thixotropiermittel zeichnen sich dadurch aus, dass sie eine geringe, bzw. keine Viskositätserhöhung verursachen und dass sie keinerlei Neigung zum Ausschwitzen resp. zu Migration zeigen.

Im folgenden sollen einige Beispiele aufgezeigt werden, die die Erfindung weiter veranschaulichen sollen, die den Umfang der Erfindung aber in keiner Weise beschränken.

### Herstellung Thixotropiermittel:

### (Referenz 1 und Beispiele 1A, 1B, 1C und 1D)

In der Tabelle 1 sind Zusammensetzungen und Eigenschaften von bevorzugten und weniger bevorzugten erfindungsgemässen Thixotropiermitteln (hergestellt in einem Polyol) im Vergleich zur Referenz 1 (hergestellt in einem Weichmacher) aufgeführt. Diese erfindungsgemässen Thixotropiermittel sind geeignet z.B. für die Verwendung in einem weichmacherfreien Einkomponentensystem auf Silan-Basis oder als thixotropes Polyol in einem Zweikomponentensystem auf Isocyanatbasis.

Die Herstellung erfolgte auf folgende Weise:

Die MDI-Schuppen wurden in einem der Rohstoffe A1, A2, A3 oder A4 (siehe Tabelle 1) unter Stickstoff und unter leichter Erwärmung aufgeschmolzen. Sofort danach wurde ein Gemisch von N-Butylamin, gelöst in einem der Rohstoffe B1, B2, B3 oder B4 mittels Tropftrichter während 2 Stunden unter Stickstoff und schnellem Rühren zugetropft. Das Zutropfen des Amin-Diolgemisches löste eine starke Exothermie aus, und die Temperatur konnte durch intensive Kühlung mit Eiswasser bei ca. 120 °C gehalten werden. Nach dem Zutropfen des Amin-Diolgemisches wurde die entstandene weisse standfeste Paste noch für weitere 30 Minuten gemischt. Der Restisocyanatgehalt der thixotropen Paste wurde titrimetrisch nach ASTM D 1638 bestimmt. Das Fliessverhalten wurde mittels einer Materialprüfmaschine Typ Zwick Z2.5/TN 1S als Auspresskraft (mit 3 mm Düse) bei 23°C ermittelt.

**Tabelle 1:**

| **Vergleichsresultate Thixotropiermittel** | | | | | |
|---|---|---|---|---|---|
| **Parameter** | **Ref. 1** | **Bsp.1A** | **Bsp.1B** | **Bsp.1C** | **Bsp.1D** |
| **Gehalt an Harnstoffaddukt [%]** | **26** | **26** | **40** | **26** | **26** |
| **MDI-Schuppen [g]** | 100 | 100 | 150 | 100 | 100 |
| A1) Polyol (OH-Zahl = 10.5) [g] | | 200 | 150 | | |
| A2) Diisodecylphthalat (Exxon) [g] | 200 | | | | |
| A3) Polyol (OH-Zahl = 56) [g] | | | | 200 | |
| A4) Polyol (OH-Zahl = 28.5) [g] | | | | | 200 |

| **Mono-butylamin [g]** | 58 | 58 | 87 | 58 | 58 |
|---|---|---|---|---|---|
| B1) Polyol (OH-Zahl = 10.5) [g] | | 242 | 213 | | |
| B2) Diisodecylphthalat (Exxon) [g] | 242 | | | | |
| B3) Polyol (OH-Zahl = 56) [g] | | | | 242 | |
| B4) Polyol (OH-Zahl = 28.5) [g] | | | | | 242 |
| Restisocyanatgehalt [%] | 0.06 | 0.005 | 0.005 | 0.08 | 0.05 |
| Auspresskraft, frisch [Newton] | 300 | 600 | 2300 | 750 | 900 |
| Auspresskraft, 1Wo 60°C | 500 | 750 | n. messbar | 1300 | 1550 |
| Konsistenz | pastös */* weich | pastös */* weich | griesig */* hart | inhomogen weich | inhomogen weich |
| MDI-Schuppen:. 4,4'-Diphenylmethylendiisocyanat (Hersteller Bayer) | | | | | |
| Polyol (OH-Zahl = 10.5): ca. 12000 g/mol, Wassergehalt ca. 0.01 % (Hersteller Lyondell) | | | | | |
| Polyol (OH-Zahl = 56): ca. 2000 g/mol, Wassergehalt ca. 0.02 % (Hersteller Lyondell) | | | | | |
| Polyol (OH-Zahl = 28.5): ca. 4000 g/mol, Wassergehalt ca. 0.03 % (Hersteller Lyondell) | | | | | |
| Mono-butylamin (Hersteller Fluka) | | | | | |
| Silan-Prepolymer siehe Patentschrift von Bayer: US 5364955 | | | | | |
| Kreide Omya BLR2 (Plüss-Stauffer) | | | | | |
| UV-Absorber Tinuvin 327 (Hersteller Ciba Geigy) | | | | | |
| Die Weichmachermigration wurde visuell auf Weiss-Zement nach 7 Tagen bei 23°C, 50 % r.F. beurteilt. | | | | | |

### Herstellung Dichtstoff:

### (Referenz 2 und Beispiele 2A, 2B, 2C und 2D)

In der Tabelle 2 sind Zusammensetzung und Eigenschaften von Dichtstoffen (formuliert mit den erfindungsgemässen Thixotropiermitteln) im Vergleich zur Referenz 2 aufgeführt. Die Herstellung erfolgte auf die Weise, dass alle Komponenten in einem Vakuummischer zu einer knollenfreien Dichtstoff-Paste kompoundiert wurden. Der Dichtstoff wurde in Plastikkartuschen nach herkömmlicher Art abgefüllt.

**Tabelle 2:**

| **Vergleichsresultate Dichtstoffe** | | | | | |
|---|---|---|---|---|---|
| **Parameter** | **Bsp.2A** | **Ref. 2** | **Bsp.2B** | **Bsp.2C** | **Bsp.2D** |
| **Thixotropiermittel** | **Bsp. 1A** | **Ref.1** | **Bsp. 1B** | **Bsp. 1C** | **Bsp. 1D** |
| Thixotropiermittel [g] | 100 | 100 | 100 | 100 | 100 |
| Silan-Prepolymer [g] | 100 | 100 | 100 | 100 | 100 |
| Kreide [g] | 150 | 150 | 150 | 150 | 150 |
| Polyol (OH-Zahl = 10.5) [g] | 60 | | 60 | | |
| Diisodecylphthalat [g] | | 60 | | | |
| Polyol (OH-Zahl = 56) [g] | | | | 60 | |
| Polyol (OH-Zahl = 28.5) [g] | | | | | 60 |
| UV-Absorber [g] | 1 | 1 | 1 | 1 | 1 |
| Dibutylzinndilaurat [g] | 2 | 2 | 2 | 2 | 2 |
| Homogenität | sehr gut | sehr gut | schlecht | schlecht | schlecht |
| Auspresskraft, frisch [Newton] | 900 | 600 | >3000 | ca. 1500 | ca. 1800 |
| Auspresskraft, 1Wo 60°C | 1080 | 650 | n. messbar | 2300 | 3400 |
| Weichmachermigration | nein | ja | nein | nein | nein |
| Hautbildungszeit [Minuten] | 72 | 90 | 164 | 102 | 60 |
| Zugfestigkeit [MPa] | 1.3 | 2 | 1 | 1 | 0.9 |
| Shore A Härte, 4 Wo RT | 16 | 17 | 18 | 15 | 17 |
| Shore A Härte, 4 Wo 90°C | 25 | 18 | 35 | 33 | 30 |
| Lagerstabilität, 4 Wo 60°C | i.o. | i.o. | schlecht | schlecht | schlecht |

### Beispiel 3:

Erfindungsgemässes Thixotropiermittel hergestellt in einem blockierten Isocyanatprepolymer

252.4 g frische MDI-Schuppen wurden in 747.6 g eines blockierten Prepolymers hergestellt aus Polyetherpolyol 2000, Toluoldiisocyanat und Caprolactam, bei ca. 60°C in einem Mischer unter Stickstoff und langsamen Rühren klar geschmolzen. Danach wurde dazu mit Hilfe eines Mischkopfes und dahinter folgendem Statikmischer eine Lösung bestehend aus 147.6 g N-Butylamin und 852.4 g eines blockierten Prepolymers gegeben, worauf sich das Harnstoffaddukt bilden konnte. Die Reaktionstemperatur überstieg nicht 100°C und die Reaktion verlief vollständig, so dass mittels Gasphasenchromatographie oder Infrarotspektroskopie (GPC) keine Restisocyanat-Monomere nachgewiesen werden konnten.

### Beispiel 4:

Erfindungsgemässes Thixotropiermittel hergestellt in einem Bindemittel auf Silan-Basis

147.6 g N-Butylamin wurden in 854.2 g des gleichen Polyurethanhybridpolymers, wie in Beispiel 2A in beschrieben, in einem Mischer homogenisiert. 175.7 g 80/20 Toluoldiisocyanat wurden in 824.3 g eines Polypropylenetherdiols (Molekulargewicht ca. 12'000) unter Stickstoff und Kühlung bei 15°C gemischt.

Die zwei Vormischungen wurden mit Hilfe eines Mischkopfes und dahinter folgendem Statikmischer zusammengeführt, worauf sich das Harnstoffaddukt bilden konnte. Die Reaktion verlief vollständig, so dass mittels GPC oder IR keine Restisocyanatmonomere nachgewiesen werden konnten.

### Beispiel 5:

Erfindungsgemässes Thixotropiermittel, hergestellt aus 2 Lösungen, wobei die MDI-Schuppen in einem Acrylatgruppen enthaltenden Polymer und die Aminverbindung in einem Prepolymer auf Silan-Basis gelöst sind.

252.4 g MDI-Schuppen wurden in 747.6 g eines Acrylatgruppen enthaltenden Polymers (Reaktionsprodukt eines Hexaethylmethacrylat mit einem Isophorondiisocyanat (IPDI)-Prepolymer) bei ca. 60°C geschmolzen. 147.6 g N-Butylamin wurden in 852.4 g eines Prepolymers auf Silan-Basis unter Stickstoff eingerührt. Die zwei Vormischungen wurden analog Beispiel 4 mit einem Statikmischer zusammengeführt, worauf sich das Harnstoffaddukt bilden konnte. Die Reaktion verlief vollständig, so dass mittels GPC keine Restisocyanat-Monomere nachgewiesen werden konnten.

## Patentansprüche

1. Thixotropiermittel auf der Basis von Harnstoffderivaten, **dadurch gekennzeichnet, dass** ein Harnstoffderivat in einem nicht-diffundierenden Trägermaterial vorliegt.

2. Thixotropiermittel gemäss Anspruch 1, **dadurch gekennzeichnet, dass** das Trägermaterial ein reaktives Trägermaterial ist.

3. Thixotropiermittel gemäss Anspruch 1 oder 2, **dadurch gekennzeichnet, dass** das Harnstoffderivat das Produkt der Umsetzung von aromatischen, monomeren Diisocyanaten mit einer aliphatischen Aminverbindung ist.

4. Thixotropiermittel gemäss Anspruch 3, **dadurch gekennzeichnet, dass** das Harnstoffderivat das Produkt der Umsetzung von 4,4'-Diphenylmethylendiisocyanat mit Butylamin ist.

5. Thixotropiermittel gemäss einem der Ansprüche 1 bis 4, **dadurch gekennzeichnet, dass** das Harnstoffderivat im Trägermaterial in einer Konzentration von 5 bis 50 Gew.-% vorhanden ist.

6. Thixotropiermittel gemäss Anspruch 5, **dadurch gekennzeichnet, dass** das Harnstoffderivat im Trägermaterial in einer Konzentration von 15 bis 30 Gew.-% vorliegt.

7. Thixotropiermittel gemäss einem der Ansprüche 1 bis 6, **dadurch gekennzeichnet, dass** das Trägermaterial ein Polyol mit einer OH-Zahl von < 28 mg KOH/g resp. einem M_{W} pro OH-Gruppe von > 2000 ist.

8. Thixotropiermittel gemäss Anspruch 7, **dadurch gekennzeichnet, dass** das Trägermaterial ein Polyol mit einer OH-Zahl < 10 mg KOH/g resp. einem M_{W} pro OH-Gruppe von > 6000 ist.

9. Thixotropiermittel gemäss Anspruch 7 oder 8, **dadurch gekennzeichnet, dass** das Polyol bei ca. 20°C - ca. 25°C flüssig ist.

10. Thixotropiermittel gemäss einem der Ansprüche 1 bis 6, **dadurch gekennzeichnet, dass** das Trägermaterial ein Isocanatgruppen-terminiertes Prepolymer ist.

11. Thixotropiermittel gemäss einem der Ansprüche 1 bis 6, **dadurch gekennzeichnet, dass** das Trägermaterial ein mit blockierten Isocyanatgruppen-terminiertes Prepolymer ist.

12. Thixotropiermittel gemäss einem der Ansprüche 1 bis 6, **dadurch gekennzeichnet, dass** das Trägermaterial ein Silangruppen-terminiertes Prepolymer ist.

13. Thixotropiermittel gemäss Anspruch 12, **dadurch gekennzeichnet, dass** das Trägermaterial ein Silangruppen-terminiertes Polyurethan-Hybrid-Prepolymer ist.

14. Thixotropiermittel gemäss einem der Ansprüche 1 bis 13, **dadurch gekennzeichnet, dass** das Trägermaterial eine Mischung von Trägermaterialien mit gleicher oder unterschiedlicher Reaktivität ist.

15. Thixotropiermittel gemäss Anspruch 14, **dadurch gekennzeichnet, dass** das Trägermaterial eine Kombination eines Acrylatgruppen enthaltendes Prepolymers mit einem Prepolymer auf Silan-Basis ist.

16. Fliessfähiges, mindestens ein härtbares Bindemittel enthaltendes System, **dadurch gekennzeichnet, dass** es das Thixotropiermittel gemäss einem der Ansprüche 1 bis 15 enthält oder daraus besteht.

17. System gemäss Anspruch 16, **dadurch gekennzeichnet, dass** es zusätzlich Füllstoffe, Weichmacher, Haftvermittler, Katalysatoren, UV-Stabilisatoren und/oder übliche Additive enthält.

18. System gemäss Anspruch 16 oder 17, **dadurch gekennzeichnet, dass** es zusätzlich eine Härter-Komponente, insbesondere einen durch Feuchtigkeit und/oder Hitze aktivierbaren latenten Härter enthält.

19. Verfahren zur Herstellung eines Thixotropiermittels gemäss einem der Ansprüche 1 bis 15, **dadurch gekennzeichnet, dass** ein Diisocyanat-Monomer in einem Trägermaterial und eine Amin-Komponente in einem Trägermaterial vermischt und zur Reaktion gebracht werden.

20. Verwendung eines Thixotropiermittels gemäss einem der Ansprüche 1 bis 19 zur Thixotropierung von Klebstoffen und Dichtstoffen.
